# EUROPEAN PATENT SPECIFICATION

(11) **EP 0 359 192 B1**
(45) Date of publication and mention of the grant of the patent: **12.04.1995**
(21) Application number: 89116839.5
(22) Date of filing: 12.09.1989
(51) Int. Cl.: G06F 15/80

(54) **Vector processors and vector register control**
Vektorprozessoren und Vektorregistersteuerung
Processeurs à vecteur et commande de registres à vecteur

(30) Priority: 13.09.1988 JP 229440/88
(43) Date of publication of application: 21.03.1990
(73) Proprietor: FUJITSU LIMITED, Kawasaki-shi, Kanagawa 211 (JP)
(72) Inventor: Seki, Ken c/o Fujitsu Limited, Nakahara-ku Kawasaki-shi Kanagawa 211 (JP); Nakatani, Shoji c/o Fujitsu Limited, Nakahara-ku Kawasaki-shi Kanagawa 211 (JP)
(74) Representative: Sunderland, James Harry

(56) References cited:
- EP-A- 0 105 125
- EP-A- 0 138 451

## Description

The present invention relates to vector processors, and vector register control. It is concerned with control of a vector processor which is operated by or employed with a plurality of scalar processors.

Vector processors and scalar processors are two mainstream kinds of computer used for various processing jobs. A vector processor is a high-speed computer designed to handle vector data and is mainly used for scientific calculations which often include vector data processing. A vector is a set of scalar data arranged in a predetermined order. Vector processing requires repeated handling of several data items and therefore requires high-speed transfer, processing and storage of these items. A scalar processor is a computer as used for general data processing in which the need for vector processing is rather rare, though the volume of data to be handled can quite often become very large.

Recently, some types of data, previously treated as scalar data, have been combined and treated as a vector. Such a process is called vectorisation, and vectorisation is effected in a compiler or in a programming stage, and the vectorised data is operated upon as a vector in order to reduce programming steps and to improve the turnaround time of the computer. As a result, vector manipulation is increasing in ordinary data processing. On the other hand, scientific calculation also includes various kinds of scalar processing. Therefore, it is becoming uneconomical to provide a specific computer which is designed only for scientific calculation (e.g. vector) use, and the demand for computers which are usable both for scientific calculation (e.g. vector) and for ordinary business data processing (e.g. scalar) is increasing.

Recent computers are provided with a vector unit which exclusively handles vector operations and a scalar unit which handles only scalar processing. A program is executed by the scalar unit, and if a vector operation is required in the program processing, the data and the vector instructions are transferred to the vector unit and processed. In most data processing jobs, less vector data is involved than scalar data, and since a vector unit is more expensive than a scalar unit, modern computers are designed to share a vector unit with several scalar units. Consider, for example, a case of processing a job of which 80% is vector processing, and the remaining 20% is scalar processing. If the processing speed of the vector unit is eight times as high as that of the scalar unit for example, and the operation time of the vector unit and that of the scalar unit are to be equal to each other, this may mean that the vector unit is idle for 50% of the total operation time, though the scalar unit is operated for the full time. Therefore, if a vector unit is shared by two scalar units, the vector unit may be employed 100% of the operation time base, with both of the scalar units also operated full time. As a result, the computer can do two jobs at the same time, and the throughput of the computer may increase by a factor of two.

The percentage or extent to which a job is vectorised, or involves vector data, is generally not so large. Accordingly, it is possible to improve the throughput of the computer by sharing a vector processor between several scalar units. Such a system is called a multiprocessor system, and is utilized in supercomputers. Details of such technology is given for example in Japanese Laid Open Patent 61-131169 by T. Okamoto et al., 18th June 1986.

EP-A-0 105 125 discloses a vector processor having a plurality of scalar units for handling scalar operations and a vector unit, shared by the scalar units, for handling vector operations. The vector unit has a vector register arrangement made up of vector register groups (each group made up of a number of vector registers) which correspond to the scalar units.

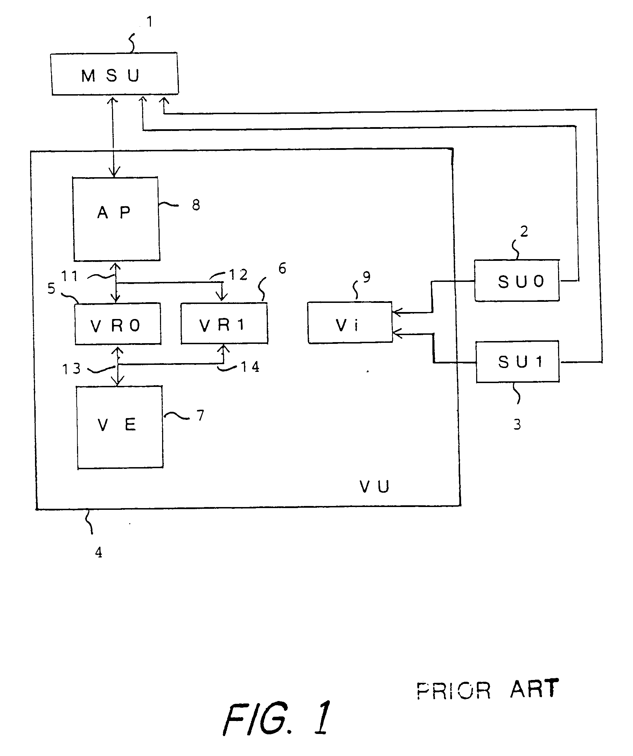

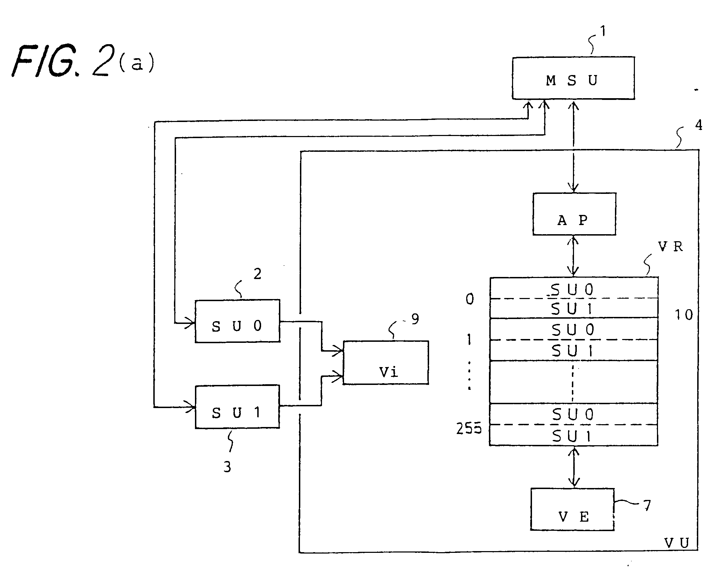

In order to make clear an advantage of the present invention, a prior art multiprocessor system, its problems, and some attempts at improvement will be firstly described briefly. Fig. 1 illustrates a general configuration of a computer system called a dual scalar unit processor (DSUP) which shares a vector unit with two scalar units. In the Figure, 1 is a main storage unit (MSU) which stores all of the information necessary for a job. 2 and 3 are respectively a first scalar unit (SUO) and a second scalar unit (SU1), which share a vector unit (VU) 4. The vector unit 4 is provided with: two vector registers, a first vector register (VR0) 5 and a second vector register (VR1) 6, which respectively store the vector data relevant to SU0 and SU1; a vector execution unit (VE) 7 which performs vector operation; an access pipe (AP) 8 which is connected between the MSU 1 and the vector registers 5 and 6; and a vector instruction unit (Vi) 9. Each of the vector registers VR0 and VR1 is connected to the access pipeline AP and the vector execution unit VE. The access pipeline AP transfers data between the main storage unit MSU and the vector registers VR0 and VR1. The vector instruction unit Vi receives vector instructions sent from each of the scalar units SU0, SU1, and checks whether or not these instructions will compete with each other during operation. If the instructions will compete with each other (that is, if, in their processing, both instructions require the use of the AP or VE at the same time) the vector instruction unit Vi selects one of the vector instructions and gives it priority for use of the access pipeline AP or the vector execution unit VE. For the prosecution of a vector instruction sent out from the first scalar unit SU0, the first vector register VR0 is used, whilst for the prosecution of a vector instruction sent out from the second scalar unit SU1, the second vector register VR1 is used.

In the system configuration of Fig. 1, the data bus lines 11, 12 providing connections between the access pipeline AP and the vector registers VR0, VR1, and the data bus lines 13, 14 providing connections between the vector registers VR0, VR1 and the vector execution unit VE have to be separately provided. That is, separate data bus lines (called simply bus lines hereinafter) should be provided for each of the vector registers. Further, in the configuration of Fig. 1, one of the vector registers becomes idle when only one scalar unit is used. Therefore, in a system in which a single vector unit is shared by N scalar units, N bus lines are necessary. In such a system, when a processing job needs only M scalar units, N-M bus lines and the same number of vector registers become idle. This is a waste of components.

Some proposals have been made for utilisation of such idle components, and to improve the cost effectiveness of the computer. Recent vector registers store data in several banks each having a relatively large memory capacity. Vector data is stored in an interleaved manner in these banks, and the stored data is accessed through time slots which are allotted to each of the scalar units, and the time slot is shifted from one bank to the next bank with a period equal to a time slot. One proposal is to allot the banks to respective scalar units. By doing so, the total number of vector registers is reduced and the utilisation factor of vector registers is improved. However, the merit of interleaving the data to the banks is lost, and each of the scalar units has to wait for the time slot which is allotted to that unit to access its respective memory bank. As a result, vector register access time is increased, and the turnaround time of the computer becomes long. Further disclosure of such technology is given in Japanese Laid Open Patent 61-262971 by T. Okamoto et al., 20th November 1986.

EP-A-0 138 451 discloses a vector processor having vector registers for storing vector data, which vector registers are divided into banks for storing vector data, each bank comprising a plurality of memory modules for storing vector elements.

According to the present invention there is provided a method of controlling a vector register in a vector processor having a plurality of scalar units each for handling scalar operations, and a vector unit for handling vector operations, said vector unit comprising a vector register which is shared by said plurality of scalar units,
characterised in that
each of said scalar units is identified by a respective SU number;
and in that said vector register comprises:-
a plurality of banks for storing vector data,
each of said banks comprising a plurality of memory modules for storing vector elements,
each of said banks having a plurality of addresses, to each of which addresses belong a plurality of said memory modules, the number of the memory modules belonging to each address being equal to the number of scalar units sharing the vector register and each of the memory modules belonging to an address being allotted a SU number corresponding to that of a respective scalar unit, each memory module being for storing a respective vector element relevant to the scalar unit having the same SU number as the module, and
each of said vector elements being accessible by assigning an address number and a SU number;
and further characterised in that said method includes:-
storing vector data relevant to respective said scalar units in memory modules having SU numbers corresponding to those of the respective scalar units concerned, the vector data being interleaved in said banks, starting from a first bank;
identifying each of the memory modules belonging to an address by a new address number which is created by combining an address number and a SU number; and
accessing vector data by assigning such new address numbers.

According to the present invention there is also provided a vector processor, having a plurality of scalar units each for handling scalar operations, and a vector unit for handling vector operations, said vector unit having a vector register for storing vector data, and said vector register being shared by said plurality of scalar units,
characterised in that
each of said scalar units is identified by a respective SU number;
and in that said vector register comprises:-
a plurality of banks for storing vector data,
each of said banks comprising a plurality of memory modules for storing vector elements,
each of said banks having a plurality of addresses, to each of which addresses a plurality of said memory modules belong, the number of memory modules belonging to each address being equal to the number of scalar units sharing the vector register,
each memory module belonging to each address having a SU number allotted thereto which is equal to that of a respective scalar unit, each memory module being respectively for storing a vector element relevant to a scalar unit having the same SU number as the module,
each of said vector elements being accessed by assigning an address number and a SU number;
and characterised by
an address generator for generating new address numbers for accessing each of said memory modules, each new address number being composed of an address number and a SU number relevant to the memory module concerned, said SU number being a number identifying a respective scalar unit.

An embodiment of the present invention can provide for improvement with regard to a vector register which is shared by a plurality of scalar units.

An embodiment of the present invention can provide a method for controlling a vector register, affording improved or with maximum operating efficiency for the register, automatically causing operations to correspond to the number of scalar units sharing the vector register.

An embodiment of the present invention can provide improved cost effectiveness of a multiprocessor system which can operate with increased or maximum speed and increased or maximum cost effectiveness, regardless of the number of scalar units sharing a vector unit.

An embodiment of the present invention can make possible the realisation a processor in accordance with the present invention using conventional circuit components, and without using special components.

Generally, each of the banks of a vector register comprises a plurality of memory modules which are accessed by assigning an address allotted to each of them, and each memory module has a predetermined memory capacity for storing vector data. These banks are accessed through several operand ports, and each of the operand ports is enabled to access a bank only through a respective time slot allotted to the operand port concerned. The time slot is shifted from one bank to the next bank with a time period equal to the time slot. A vector register, in accordance with an embodiment of the present invention, is provided with a plurality of memory modules belonging to each of the addresses (or address numbers). The number of these memory modules belonging to an address is equal to the number of the scalar units sharing the vector processor.

These memory modules are each identified by a new address number which is composed of an address number and a SU number, which is a number identifying (one of) the scalar units sharing the vector register. The vector data relevant to each scalar unit is stored in interleaved manner in the banks in the memory modules having the SU number of the respective scalar unit. In order to access the vector data, the new address numbers are automatically generated by an address generator. A scalar unit does not have to wait for specific time slot which enables access to a specific bank, because the data is stored interleaved in the banks, and the interleaved data is successively accessed in successive time slots.

Further, each of the scalar units can independently access respective data using a respective SU number, without waiting until another scalar unit has finished its vector access. Therefore, vector processing is performed as if each scalar unit were provided with an exclusive vector register.

Another feature of an embodiment of the present invention is that when one or some of the scalar units sharing a vector unit are not being used, the memory modules relevant to the unused scalar unit(s) can all be utilised for increasing the memory capacity of the scalar unit(s) being used. For example, when a computer which shares a vector unit with four scalar units is operated using two or only one scalar unit, the memory modules provided for unused scalar unit(s) are utilised for increasing the memory capacity of the active scalar units. Therefore, the active scalar units can handle twice or four times as many vector elements compared to when the computer is operated using four scalar units.

In such manner, a multiprocessor system in accordance with an embodiment of the present invention makes full or fuller use of the vector register for processing a job, and offers improved cost effectiveness of the computer.

An embodiment of the present invention can provide a method for controlling a vector register to improve turnaround time and to save cost in relation to a high-speed vector processor which has a plurality of scalar units.

Reference is made, by way of example, to the accompanying drawings, in which:-
Fig. 1 is a schematic diagram illustrating the configuration of a prior art vector processor having dual scalar units,
Fig. 2 is a diagram schematically illustrating basic features of a vector processor system in accordance with, an embodiment of the present invention, wherein:-
   Fig. 2(a) illustrates a circuit configuration of a vector unit shared by two scalar units; and
   Fig. 2(b) is a diagram illustrating how a vector register is accessed by two scalar units,
Fig. 3 illustrates the accessing of banks in a vector register of an embodiment of the present invention, wherein:-
   Fig. 3(a) illustrates circuit connection of the banks; and
   Fig. 3(b) illustrates how time slots are allotted to each of operand ports of a vector register for accessing each bank,
Fig. 4 illustrates how vector data is stored in each of the banks, wherein:-
   Fig. 4(a) illustrates a relationship between memory modules and address numbers in ordinary banks when a vector register is operated with one scalar unit;
   Fig. 4(b) illustrates a configuration of an address number as employed in relation to Fig. 4(a);
   Fig. 4(c) illustrates a relationship between an address number, SU number and memory modules as employed in an embodiment of the present invention, when a vector register is operated in DSUP mode;
   Fig. 4(d) shows how an address number and a SU number are combined to create a new address number for each of the memory modules of Fig. 4(c);
   Fig. 4(e) illustrates how memory modules are arranged in a bank and how the memory modules are identified by SU numbers when a vector register is shared by four scalar units in an embodiment of the present invention; and
   Fig. 4(f) illustrates a configuration of a new address number for identifying a memory module in the arrangement of Fig. 4(e),
Fig. 5 is a circuit diagram of an address generator applicable to an embodiment of the present invention,
Fig. 6 is a circuit diagram of the incrementer as employed in the circuit of Fig. 5,
Fig. 7 is a block diagram of a circuit for controlling the sequence of access to a vector register, in accordance with an embodiment of the present invention,
Fig. 8 is a block diagram illustrating overall configuration of a vector register, in accordance with an embodiment of the present invention.

Throughout the Figures, the same reference characters or numerals designate the same or corresponding parts.

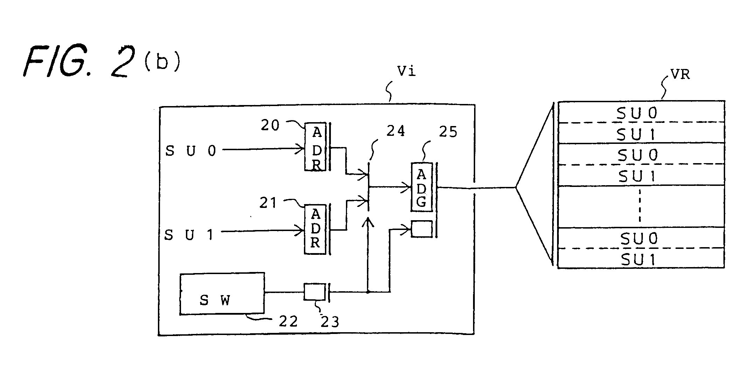

Fig. 2(a) is a block diagram showing basic features of a vector processor, embodying the present invention, which has two scalar units sharing the same vector unit, that is, a dual scalar unit processor (DSUP). Compared to a prior art DSUP system as shown in Fig. 1, the vector unit VU of the present invention has only one vector register VR. Accordingly, the data bus lines connecting the access pipe AP and the vector register VR, and the vector register VR and the vector execution unit VE are reduced to one in each case. Therefore, the utilisation factor of components is improved.

As shown in Fig. 2(a), the vector unit VU of the present invention has a vector register VR which stores vector data sent from the MSU 1 (requested from each of the scalar units SU0 and SU1). The vector register VR is provided with a plurality of memory modules 10 for storing data. Each of the memory modules has a memory capacity for storing a predetermined number of bytes of information, 16 bytes for example. Under each address (the addresses are denoted by decimal numerals on the left side of the memory modules in Fig. 2(a)) two memory modules are included. These two memory modules respectively store data relevant to SU0 or SU1 as shown in Fig. 2(a). The decimal numerals are address numbers. Usually, banks are provided with more memory modules and addresses, but in the following disclosure, it is assumed that the banks are provided with 256 addresses, and hence 512 memory modules are included in each bank, for the sake of easy explanation.

Fig. 2(b) illustrates how these memory modules are accessed by the scalar units SU0 and SU1. The vector instruction unit Vi (9) of an embodiment of the present invention comprises two address registers (ADR) 20, 21, a switching circuit (SW) 22, a scalar unit identifier 23, a multiplexer 24 and an address generator (ADG) 25. An address number sent from the first scalar unit SU0 is set in the first address register 20, whilst an address number sent from the second scalar unit SU1 is set in the second address register 21. The switching circuit 22 determines which scalar unit has a right to use the vector register VR. If the first scalar unit SU0 is given priority, the switching circuit 22 sets a signal "0" in the scalar unit identifier 23, and if the second scalar unit SU1 is given priority, the switching circuit 22 sets a signal "1" to the scalar unit identifier 23. If "0" is set in the scalar unit identifier 23, the multiplexer 24 sends the address number stored in the first register 20 to the address generator 25, and if "1" is set in the scalar unit identifier 23, the multiplexer 24 sends the address number stored in the second register 21 to the address generator 25. The address generator 25 generates a new address number combining the address number sent from the multiplexer 24 and the contents of the scalar unit identifier 23, and sends the new address number to the vector register VR. Thus, specific data corresponding to the scalar unit SU0 or SU1 is accessed.

Now, further details of the configuration of these elements and their operation will be described.

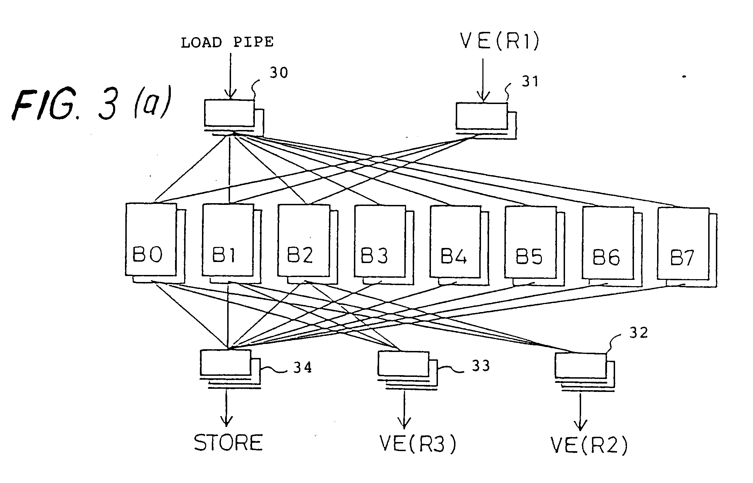

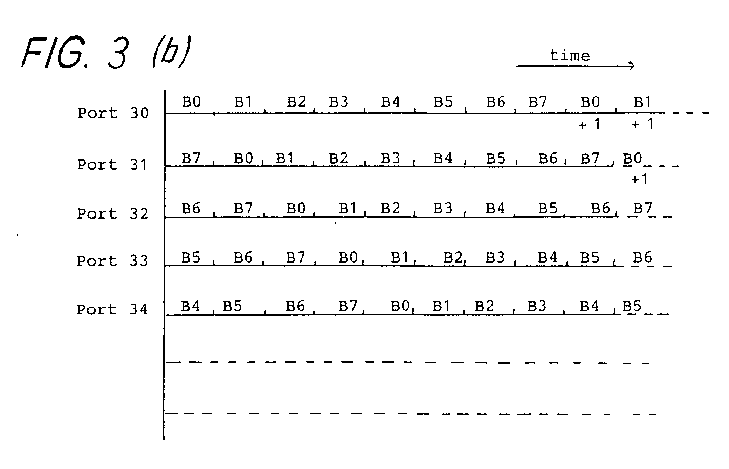

Fig. 3(a) illustrates an example showing how banks are connected to other parts of the vector processor. In this case, the memory register (vector register) is provided with eight banks, denoted B0, B1, B2 ..., B7. The banks are composed of ICs (integrated circuits) comprising random access memory (RAM). Each of the banks has 256 addresses, from 0 to 255. Under each of the addresses two memory modules are included. Therefore, each bank is provided with 512 memory modules. The banks are connected to other (external) circuits via operand ports. In the example of Fig. 3(a), five operand ports 30 to 34 are shown. The operand ports 30 and 31 are writing ports which receive signals from external circuits and send them to the banks. 32 to 34 are output ports which receive signals from the banks and send them to external circuits. For example, the writing port 30 receives signals from a load pipe (not shown) which is a part of the access pipeline AP, and the writing port 31 receives signals from an output port R1 (not shown) of the vector execution unit VE of Fig. 2(a). The output port 34 sends out signals from the banks to a store port (not shown) of the access pipe AP, other writing ports 32 and 33 are respectively connected to operand ports R2, R3 (not shown) of the vector execution unit VE. These connections are effected using data bus lines. In Fig. 3(a), the connections between the operand ports 30 and 34 and each bank are shown more fully, whilst the connections between other operand ports (31 to 33) and each bank are shown less fully, for the sake of simplicity. Practically, ports 31 to 33 are connected in a manner similar to port 30 or 34. The process of performing a vector calculation is not explicitly relevant to the present invention, which is related to access to a vector register, and therefore further description is omitted. Details of such operation can be seen for example in United States Patent 4 507 728, 26th March 1985, by K. Sakamoto et al.

It is known in the art that the access time of a vector register is reduced by interleaving the vector data over all of the banks. How such an interleaving method is applied in an embodiment of the present invention for a multiprocessor system will be described.

To each of the operand ports, time slots are allotted during any one of which only one bank can be accessed, and access to other banks is forbidden, in order to avoid double access. The time slots are shifted from one bank to the next bank as shown in Fig. 3(b). Time slot timings are shown for each of the operand ports. The first line in Fig. 3(b) illustrates the time slots allotted to the operand port 30. During the first time slot, the operand port 30 can access (is accessible to) the first bank B0, but it is forbidden to access to other banks. During the next time slot, the port 30 is accessible only to the second bank B1. In like manner, the operand port 30 is succeedingly accessible to all banks. After time slot in which bank B7 is accessible for port 30 such successive accesses are repeated. The second line shows time slots allotted for the operand port 31. The time slots on the second line in Fig. 3(b) are shifted to the right by one time slot as compared with the time slots on the first line. Similarly, time slots on each of the lines in Fig. 3(b), for other operand ports, are respectively shifted to the right by one time slot as compared with the time slots on the line immediately above.

Vector data is stored, interleaved across the banks, starting from the first bank B0. Therefore, each operand port has to wait until its respective time slot for accessing B0 (which time slot comes as shown on respective timing lines of Fig. 3(b)) but the waiting time is maximum of seven time slots. After that each operand port can successively access the vector data (in successive banks). As can be seen in Fig. 3(b), whilst one operand port is accessing one bank, other operand ports can access other banks. Therefore, each operand port can access the vector register independently of the other ports: the ports merely have shifted bank access timings, from one port to another. In contrast, in the prior art DSUP system, the banks are each exclusively occupied by a specific scalar unit for storing respective vector data. Each of the banks is accessed only once for each scan of the banks. The word "scan" means to access all of the banks one by one with a time slot (which shifts successively), in the manner of scanning in television. Therefore, only one address is accessed in each scanning, and if the register is composed of eight banks, for example, each port has to wait for seven time slots until it can access a next data item. This is the major reason why the access time to a vector register of prior art system becomes very long.

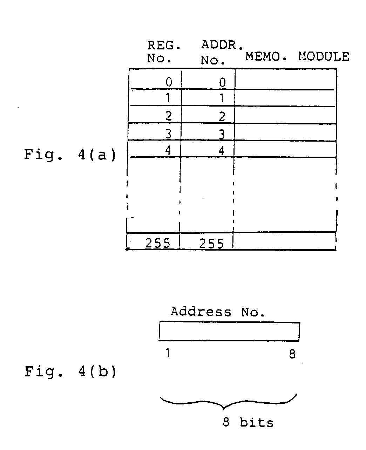

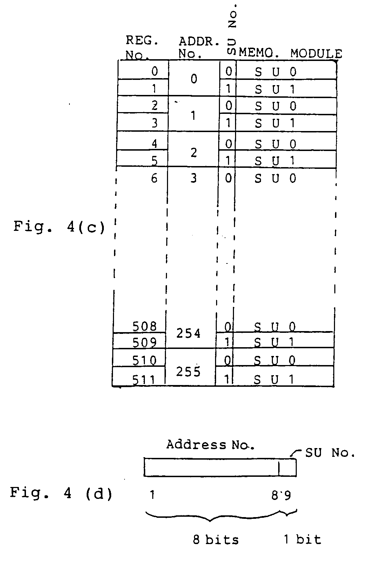

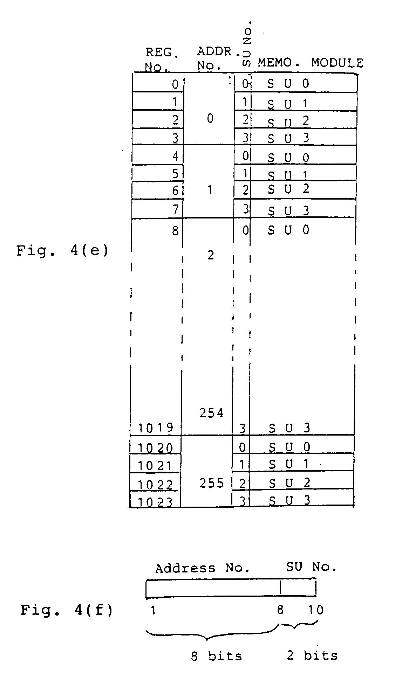

Fig. 4 illustrates how each of the memory modules are identified in a bank. Fig. 4(a) shows a relationship between address number and memory modules as in ordinary memory devices. All of the memory modules are numbered by register numbers. Each address number includes only one memory module. Therefore, a register number is equal to the address number. When a vector register is occupied (used) with only one scalar unit, such memory device is used. As shown in Fig. 4(b), each of 256 address numbers can be expressed by an eight-bit binary numeral. By assigning an address number, the corresponding memory module is accessed.

In the case of the DSUP system in accordance with the present invention as described above, each address includes two memory modules as shown in Fig. 4(c). Therefore, the number of memory modules is twice the number of addresses. These memory modules are identified by an address number and a SU number, the SU number being a number identifying the scalar unit using the memory module. As shown in Fig. 4(c), the memory modules relevant to the first scalar unit SU0 are identified by a SU number 0, whilst the memory modules relevant to the second scalar unit Su1 are identified by a Su number 1. Fig. 4(d) illustrates how a new address number is created by combining an address number and a SU number. By adding the SU number to the end of the address number, the new address number becomes a nine-bit binary numeral.

All of the memory modules of each of the banks of the vector register are similarly identified by respective new address numbers made by combining address numbers and SU numbers. The vector data from the first scalar unit SU0 is stored in the memory modules having "0" SU number of each bank, interleaved across the banks. In the case of the embodiment of Fig. 3, the data is eight-way interleaved and stored in eight banks. Similarly, the vector data from the second scalar unit SU1 is stored in the memory modules having the SU number "1", interleaved across the banks. Each item of vector data should be stored starting from the first bank B0, and stored with interleaving of all of the banks. However, it is unnecessary to start from address "0". Therefore, if a vector data item having 25 vector elements is stored in eight banks, for example, the first vector element is stored in the bank B0, the second vector element is stored in B1, and so on. In such a manner, 25 vector elements are stored with eight-way interleaving. Therefore all of the banks use three memory modules except the first bank B0, which uses one more memory module to store the 25th vector element. Of course, these vector elements are stored in the memory modules corresponding to the scalar unit which uses the vector data item concerned.

When this data item is requested, an address generator succeedingly generates new address numbers having the appropriate SU number on the ends of the address numbers. So, the data item is accessed. How this is done will be described later.

The above explanation has been given with respect to a DSUP mode, that is a mode in which two scalar units share a vector register. In the following embodiment of the present invention, a vector register is shared by four scalar units. Fig. 4(e) shows the relationship between addresses and memory modules in each bank. As shown in the Figure, each of the addresses includes four memory modules. Each of the modules is identified by an SU number: 0, 1, 2 or 3. Each of the memory modules respectively stores the data relevant to one of the four scalar units SU0, SU1, SU2 and SU3. As shown in Fig. 4(f), the SU number is expressed by two bits, being either 00, 01, 10 and 11. These SU numbers are added to the ends of address numbers of the modules, so, the new address numbers are expressed by ten bits, as shown in Fig. 4(f).

Now it will be easy for one skilled in the art to extend the principle elucidated by the above embodiments to a case in which any number of the scalar units share a vector register. Generally, a computer is designed so that 2ⁿ scalar units share a vector register, where n is an integer which may be zero. If 2ⁿ scalar units share a vector register, 2ⁿ memory modules are included in an address. They can be distinguished by 2ⁿ SU numbers which can be expressed by n bit binary numerals. The new address numbers are created by adding the SU numbers composed of n bits to the end of the binary address numbers. The access method for 2ⁿ scalar units will be easily analogised from the description relevant to Fig. 2(b). Of course, the number of scalar units cannot be greater than the number of banks. However, it is impractical to increase the number of scalar units too far, because the operation speed of the vector unit cannot be increased correspondingly, and there must be a balance of speed between the scalar units and the vector unit. Therefore, four scalar units may be sufficient for normal practical applications.

It will be apparent that in above embodiments eight bits are necessary for identifying 256 addresses. However, if the total number of addresses in a bank is different, the number of bits should be varied in accordance with the number of the addresses. In any event, the new address numbers are created by adding SU numbers after one end (or each end) of the address numbers. Further, it will be apparent for one skilled in the art that the new addresses created in such a manner are quite similar to ordinary address numbers. For example, 256 memory modules in Fig. 4(a) are identified by binary numerals of eight bits, the 512 modules of Fig. 4(c) are identified by binary numerals of nine bits. Similarly, the 1,024 memory modules of Fig. 4(e) are identified by address numbers of 10 bits. This means that it is unnecessary to design a special RAM for use in an embodiment of the present invention. A hardware designer of a processor in accordance with an embodiment of the present invention can select from ordinary IC RAM devices those devices which are desirable in design choice terms, considering the total number of memory modules and memory capacity of each memory module. The last bit or last few bits of the ordinary address number is used as (or provided by) the SU numbers. This is important for the operator of the computer. The operator does not have to rewrite address numbers to new address numbers depending on how many scalar units are sharing a vector processor. Such convenience will become more apparent from the description hereinafter.

In the explanation relating to Fig. 3(a), only five operand ports are mentioned. However, it will be apparent that the number of operand ports which can access the banks independently from one another can be increased to equal the total number of banks. In the embodiment of Fig. 3 therefore, another 3 ports can be added. Usually, a vector register is provided with many more banks. Accordingly, many independent operand ports can be connected to the vector register. Further, these operand ports need not necessarily be used only by one of the scalar units. Though it is not shown in Fig. 3(a), other operand ports related to other scalar units may be connected to the banks. Whilst a scalar unit is performing an operation, other scalar units can access the same bank through other operand ports. They never collide with each other, because the memory modules which are accessed by the scalar units are distinguished by respective SU numbers, and the time slots allotted to different operand ports are shifted, one by one, in a manner as shown in Fig. 3(b). Therefore, scalar units sharing the vector register need not wait until the operation of another scalar unit sharing the register is finished. They can access the vector register while other scalar units are accessing the same vector register, and have to wait for access only for a maximum of one scanning of the banks. This is equivalent to providing each of the scalar units with an exclusive vector register.

In relation to the above description, it may have been noticed that the number of modules in a bank should be sufficiently large that very long vector data can be stored, that is, a vector which has many vector elements, because each memory module stores one vector element. Let the number of addresses in a bank be N, and the number of the banks be M. The maximum length of a vector which can be handled by a scalar unit is M x N. However, there might occur a case in which the computer must handle very long vector data whose number of vector elements exceeds M x N. In such a case, a vector processor in accordance with an embodiment of the present invention can, effectively, increase memory capacity by combining memory modules having different SU numbers, though the number of scalar units sharing the vector register is decreased. Some techniques of address combination are disclosed in Japanese Patent 58-53786, 1st December 1983, by K. Uchida. An embodiment of the present invention may utilise an address combination technique for further increasing the cost effectiveness of the computer.

Consider a case in which one scalar unit is not used in a DSUP system. Then, half of the memory modules become idle. In such a case, a system in accordance with an embodiment of the present invention utilises the memory modules normally related to the idle scalar unit for increasing the memory capacity of the active scalar unit. For example in Fig. 4(c), if SU1 is not used, the active scalar unit SU0 uses not only the memory modules having "0" SU number, but also the modules having the SU number "1". Vector data is accessed with interleaving between eight banks, and after a scan of memory modules having "0" SU number, the address generator of this embodiment of the present invention generates a new address number having the same address number but a different SU number. Therefore, the next scanning takes place over memory modules having the SU number "1". After each such double scanning the address number is increased by one. Therefore, all of the memory modules are used for SU0. This is equivalent to the number of memory modules in each bank being doubled and, therefore, SU0 can handle vector data twice as long as when SU0 is sharing the vector register with SU1.

Similarly, in relation to Fig. 4(e), if only one scalar unit SU0 is active, and other scalar units are idle, the number of memory modules usable for SU0 is multiplied by four, compared to the number so usable when all of the scalar units are active. In this case, SU0 can handle vector data four times as long as when four scalar units are active. If SU0 and SU2 are active and SU1 and SU3 are idle, the memory capacities of SU0 and SU2 can be doubled. In such manner, by decreasing the number of scalar units sharing the same vector register, the memory capacity available for active scalar units can be increased. This enables economy in the size of RAM, because it is unnecessary to prepare excessively large numbers of memory modules for long vector data which will not very often appear. If long vector data does appear, the vector processor can cope with it by decreasing the number of scalar units.

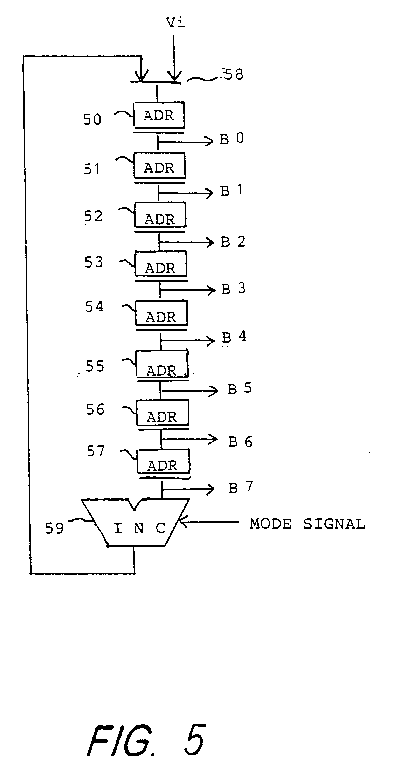

Now, a circuit which performs such access control will be explained. Fig. 5 is a block diagram illustrating an address generator used in a Vector register in accordance with an embodiment of the present invention. The illustrated circuit is applicable to a vector register having eight banks. It will be easy for one skilled in the art to modify the circuit for application for different numbers of banks. This circuit corresponds to the address generator 25 in Fig. 2(b). In Fig. 5, the reference numerals 50 to 57 designate address registers (ADR), which are connected in cascade and shift the content from one address register to the next address register in synchronisation with time slot shifting. 58 is a multiplexer, and 59 is an incrementer (INC).

When one of the scalar units wants to access vector data having a length of L, that is the number of the vector elements to be accessed is L, the scalar unit sends an address number of the first vector element and the length L to the vector instruction unit Vi of Fig. 2(b). The vector instruction unit Vi determines priority, and if priority is given to the scalar unit concerned, the address number is transmitted to the address generator 25 which generates a new address number combining the address number and the SU number of the scalar unit. This new address number is fed to the multiplexer 58 of Fig. 5. The multiplexer 58 feeds the new address number to the first address register 50 which sends out the new address number to the first bank B0 during the first time slot. In the second time slot, the new address number is shifted to the second address register 51, which sends the new address number to the second bank B1. In such a manner the new address number is fed to all of the banks with successive shifts of the time slot. At each time slot, one vector element is accessed. When the first scanning is over, that is when the new address number is sent out to the last bank B7, the address is sent also to the incrementer 59, which adds 1 to the address (that is, to the 8th bit in Fig. 4(d)) and feeds the incremented address back to the multiplexer 58, and the second scanning begins. The above sequence corresponds to the first timing line of Fig. 3(b). Such sequence is repeated until the last vector element is accessed. In Fig. 3(b), a second scanning is denoted by +1. The circuit is provided with a decrement counter (not shown) which stores the vector length L, and each time a bank is accessed, the decrement counter counts down by one. When the content of the decrement counter becomes 0, the sequence is stopped.

In the above explanation, it will be understood that vector data should be stored interleaving through banks starting from the first bank B0. However, it is unnecessary to start from the address 0. The only limit is that the address should start from a number such that the bank has a capacity for storing all of the data.

Further comment on the operation of the incrementer 59 of Fig. 5 may be useful. There are several ways of generating a new address after each scanning. For example, in the case of Fig. 4(c), it will be understood by one skilled in the art that adding one ("1") to the address number (that is, to the 8th bit in Fig. 4(d)) is equivalent to adding two ("10") to the new address number (that is, the 9th bit of the new address). Similarly, in the case of Fig. 4(e), adding one ("1") to the address number (that is, the 8th bit) is equivalent to adding four ("100") to the new address (that is, the 10th bit in Fig. 4(f)).

In a DSUP system, when the system is operated in DSUP mode, the incrementer 59 adds "1" to the 8th bit (or adds "10" to the 9th bit). When the system is operated in a single scalar unit mode, the incrementer adds "1" to the 9th bit. Similarly, in a four scalar units system, when it is operated with all four scalar units, the incrementer 59 adds "1" to the 8th bit (or adds "100" to the 10th bit). When only one scalar unit is active, the incrementer 59 adds "1" to the 10th bit of the new address. Accordingly, in the DSUP mode operation, the second scanning is effected on the next address but on the same SU number. In a single scalar unit mode, the second scanning is effected on the same address but on the next SU number, so the addresses are combined, and the total number of the memory modules usable for the active scalar unit is doubled, or multiplied by four. These operations of the incrementer 59 are controlled by a mode signal set from the vector instruction unit Vi.

It will be easy for one skilled in the art to determine how to combine modules when SU0 and SU2 are active, and SU1 and SU3 are idle, by adding appropriate numbers to the 8th or 10th bits. Further it will be easy for one skilled in the art to extend the above generally to the case in which 2ⁿ scalar units share a vector register. In such a case, n bit numerals should be used for the SU number. After each scanning of the banks, one (unity) should be added to the address number, or 2ⁿ should be added to the new address number, when all of the scalar units are used. It will be understood that adding 2ⁿ (that becomes n+1 bits) to the new address number is equivalent to adding one (unity) to the address number. When some of the scalar units are idle, one (unity) should be added to the appropriate bit of the new address number, for example.

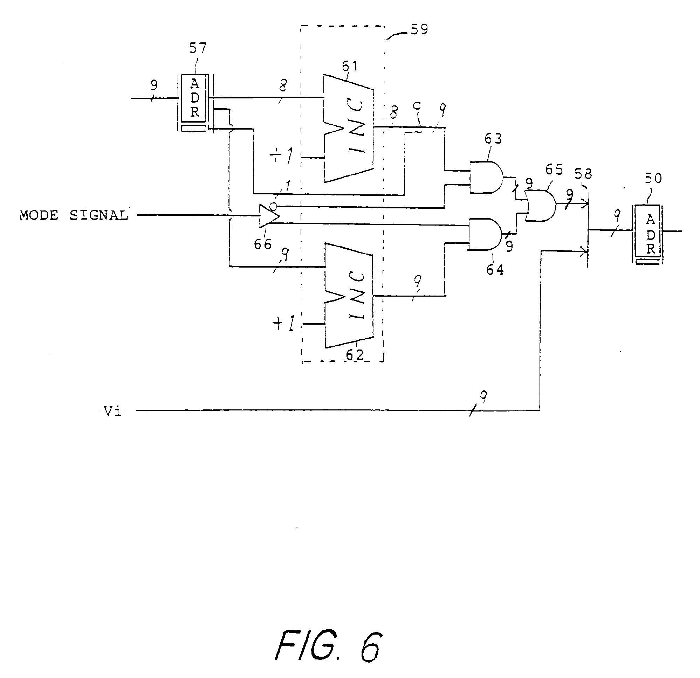

There are various possible ways of designing hardware which will perform the operations required of the incrementer 59. One possibility, employed in an embodiment of the present invention, is shown in Fig. 6. This circuit is designed for a DSUP system, and it adds "1" to the 8th bit for DSUP mode operation, and adds "1" to the 9th bit for single scalar unit mode. In this circuit, two incrementers 61 and 62 are used. These incrementers correspond to the block diagram of incrementer 59 in Fig. 5. Small numerals marked with a slash (/) across a connection line indicate that the line is composed of a plurality of wiring lines of the number indicated. From the address register 57 (which corresponds to ADR 57 of Fig. 5) the first 8 bits of the new address number (that is the address number) are fed to the first incrementer 61 through 8 wiring lines, and incremented by one. The 9th bit, that is the SU number, bypasses the incrementer 61 through the line marked /1, joins again with the first 8 bits at the point C, and provides a 9-bit signal transmitted through 9 wiring lines to an AND gate 63. Though only one AND gate is shown in the Figure, the AND gate 63 is composed of nine AND gates connected in parallel, and one input terminal of each of these AND gates is connected to a respective one of the nine wiring lines coming from the first incrementer 61. A small triangle 66 indicates an inverter having both an inverted output terminal indicated by a small circle, and a non-inverted output terminal.

A mode signal sent from the Vi is "0" when the system is operated in DSUP mode. The inverted output "1" is fed to each of the other input terminals of the nine AND gates. Therefore, the output of the AND gate 63 becomes the same as the input signal to the gate. The non-inverted output "0" is fed to each input terminals of the second AND gate 64, which is similarly composed of nine AND gates connected in parallel. The other input terminals of these AND gates are connected to the second incrementer 62, which adds "1" to the end (the 9th bit) of the new address sent from the ADR 57 through 9 wiring lines. The output of the AND gate 64 becomes all "0" because one of the input terminals of each AND gate is "0". The output of both AND gates 63 and 64 are fed to an OR gate 65. The OR gate 65 also is composed of nine OR gates connected in parallel to each other. Therefore, the output of the OR gate 65 becomes the same as the input from the AND gate 63, that is, the new address number which is incremented by one of the 8th bit.

When the system is operated in a single scalar unit mode, the mode signal sent form Vi becomes "1". In this case, the output of the inverted output terminal of the inverter 66 becomes "0". Therefore, the outputs of the first AND gate 63 become "0". On the other hand, the output of the non-inverted terminal is "1". Therefore, the output of the second AND gate 64 becomes the same as its input, and this is output through the OR gate 65. So, the new address number fed to the multiplexer 58 becomes a new address number which is incremented by "1" in comparison with the former new address.

The above-described embodiment of the incrementer is designed for a DSUP system. It will be easy for one skilled in the art to provide a modified design applicable to a system having a different number of scalar units. Further, as mentioned above, there are many ways of generating the new address numbers which are easy for one skilled in the art to implement in hardware which performs the above-described operation. Therefore, further description will be omitted.

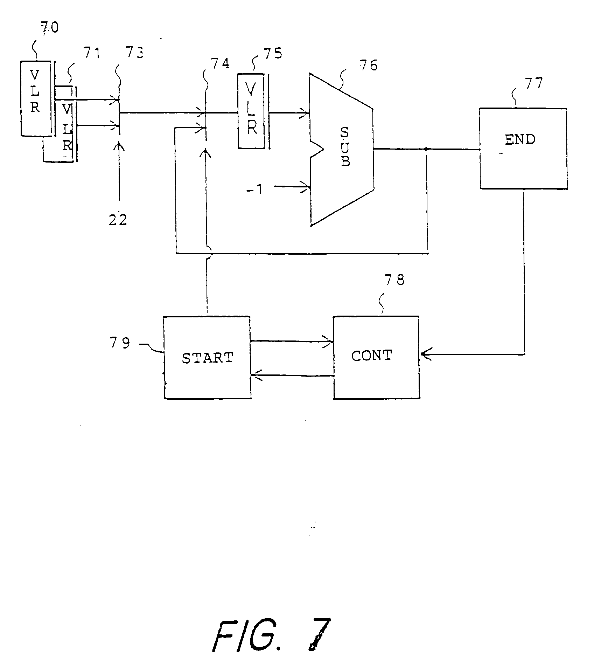

Control of access to a vector register will now be described. Fig. 7 is a block diagram of a circuit for controlling access sequence in an embodiment of the present invention. The illustrated circuit is applicable for a DSUP system. In the Figure, 70 and 71 designate vector length registers (VLR) which respectively store the vector length information sent from SU0 or SU1 of Fig. 2(a). 73 is a selector which sends the vector length information stored in the VLR 70 or 71 to a selector 74 under the control of switching circuit 22 of Fig. 2(b). These controls are similar to those described with respect to ADRs 20 and 21 in Fig. 2(b). 74 is a selector, and 75 is a vector length register (VLR) which stores the vector length which is to be accessed in succession. When priority is given to one of the scalar units, the vector length relevant to the scalar unit is sent through the selector 74 and stored in the VLR 75. 76 is a subtracter (SUB) which subtracts 1 from its input, each time a bank is accessed. The output of the subtracter 76 is fed back to the selector 74 and therefore each time a vector element is accessed, the content of the VLR 75 is decreased by one (unity). The output of the subtracter 76 is also fed to an end discriminator (END) 77 which discriminates the end of the process when the output of the subtracter 76 becomes 0 or a negative value.

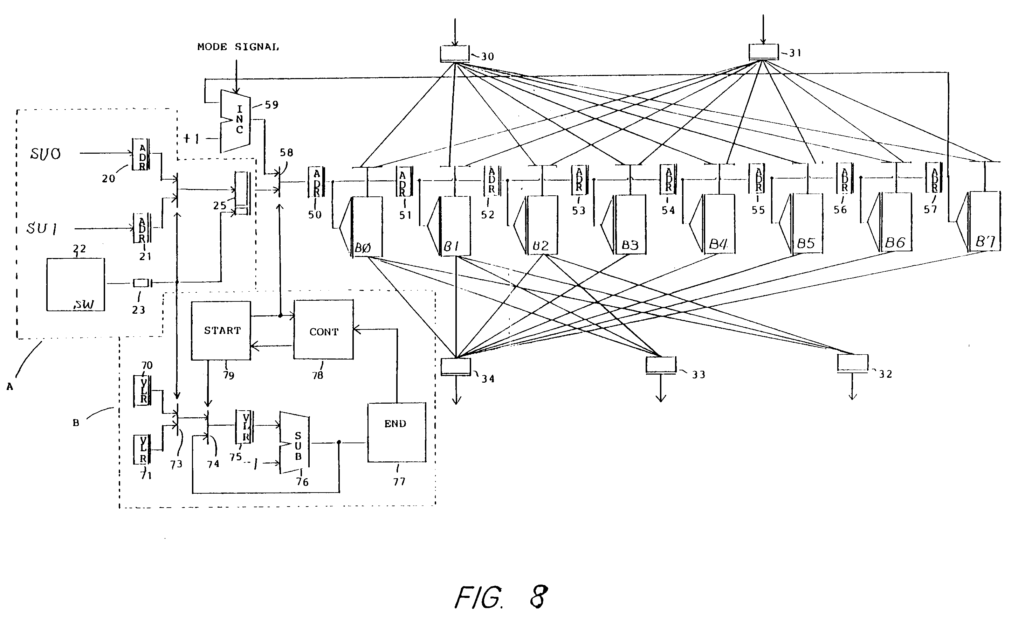

Fig. 8 illustrates the configuration of main parts of a vector register embodying the present invention. It will be understood that the portion bounded by a broken line A corresponds to the vector instruction unit Vi in Fig. 2(b), and the portion bounded by a broken line B corresponds to the circuit of Fig. 7. The remaining parts corresponds to the vector generator shown in Fig. 5 and vector register banks. 78 is an instruction control circuit (CONT) which discriminates whether a process effected during a time slot is still in operation or is already finished. The instruction control circuit (CONT) 78 also controls the steps of the process, such as write in or read out and so on. Such steps are all similar ones which are performed in all of the vector registers, and are not explicitly relevant to the present invention, so further description is omitted for the sake of simplicity. 79 is a start condition detector circuit (START) which checks all of the instructions waiting to start in a time slot, checking whether they will cause a conflict or not with an instruction which is now under operation, and decides to let them start in a next time slot or let them start in a time slot pipe which is now idle. By a start signal generated from the start condition detector 79, a new address and a new vector length are set respectively to the multiplexer 58 and the selector 74, and a new vector access process is started. The circuit relevant to such operation is also conventional in all of the vector registers, so further description of circuit configuration and its operation is omitted for the sake of simplicity.

Above, embodiments of the present invention have been described in the main in relation to a vector register having 8 banks, each bank having 256 addresses. This has been done only for the sake of simplicity and easy understanding. The embodiments are, therefore, to be considered in all respects as illustrative and not restrictive.

An embodiment of the present invention provides a multiprocessor sharing a vector register with several scalar units. To each of the addresses in each of the banks of the vector register belong a plurality of memory modules for storing vector elements. The number of the memory modules belonging to an address is equal to the number of scalar units sharing the vector register. Each of the memory modules is identified by a new address number which is created combining the address number and a SU number, the latter being a number serving to identify each of the scalar units. Vector data relevant to a particular scalar unit is stored in memory modules having a SU number the same as that of the scalar unit concerned. The data is stored interleaved in all of the banks. When a scalar unit accesses vector data, it sends out the first address number and the vector length of the requested vector data. An address generator automatically generates new address numbers in succession, combining the address number and the SU number, and the data is accessed. When some of the scalar units are not used, the memory modules relevant to the unused scalar units may be utilised for increasing the memory capacity of the active scalar units.

## Claims

1. A method of controlling a vector register in a vector processor having a plurality of scalar units each for handling scalar operations, and a vector unit for handling vector operations, said vector unit (VU) comprising a vector register (VR) which is shared by said plurality of scalar units (SU0, SU1),
characterised in that
each of said scalar units (SU0, SU1) is identified by a respective SU number;
and in that said vector register (VR) comprises:-
a plurality of banks (B0 to B7) for storing vector data,
each of said banks (B0 to B7) comprising a plurality of memory modules for storing vector elements,
each of said banks (B0 to B7) having a plurality of addresses, to each of which addresses belong a plurality of said memory modules, the number of the memory modules belonging to each address being equal to the number of scalar units (SU0, SU1) sharing the vector register (VR) and each of the memory modules belonging to an address being allotted a SU number corresponding to that of a respective scalar unit (SU0, SU1), each memory module being for storing a respective vector element relevant to the scalar unit (SU0, SU1) having the same SU number as the module, and
each of said vector elements being accessible by assigning an address number and a SU number;
and further characterised in that said method includes:-
storing vector data relevant to respective said scalar units (SU0, SU1) in memory modules having SU numbers corresponding to those of the respective scalar units (SU0, SU1) concerned, the vector data being interleaved in said banks (B0 to B7), starting from a first bank;
identifying each of the memory modules belonging to an address by a new address number which is created by combining an address number and a SU number; and
accessing vector data by assigning such new address numbers.

2. A method as claimed in claim 1, wherein the vector register (VR) further comprises a plurality of ports (30, 31, 32, 33, 34) for accessing the banks (B0 to B7), and the vector register (VR) affords time slots having equal predetermined time periods, during each of which time slots only one bank (B0 to B7) is accessed;
wherein each of the time slots scans from bank to bank, so that a bank (B0 to B7) is made accessible in the time slot and the time slot is shifted from one bank to the next bank with a period equal to the period of the time slot, to make successive banks (B0 to B7) accessible in the time slot, and after scanning has reached a last bank, the time slot shifts back to a first bank, and repeats the same scanning sequence;
wherein the number of said time slots is equal to the number of banks (B0 to B7), and said time slots are displaced one from another by time periods equal to the period of the time slot;
wherein each of said time slots also scans each of said ports (30, 31, 32, 33, 34) in a manner similar to the scanning of the banks (B0 to B7); and
during a time slot, each of said ports (30, 31, 32, 33, 34) is accessible to/from that one of the banks (B0 to B7) which is being scanned by the time slot at the moment concerned.

3. A method as claimed in claim 1 or 2, wherein when one or some of the scalar units (SU0, SU1) sharing the vector register (VR) is or are not used, the memory modules relevant to said unused scalar unit or units are employed for increasing memory capacity of the scalar unit or units using the vector register (VR).

4. A method as claimed in claim 1, 2 or 3, wherein each said new address number is composed of a binary number created by connecting a SU number to the end of an address number, and new address numbers are varied after each scanning of an access time slot over the banks (B0 to B7) in the following manner:-
when all of the scalar units (SU0, SU1) sharing the vector register (VR) are used, "1" is added to the end of the binary digits of an address number; and
when some of the scalar units (SU0, SU1) sharing the vector register (VR) are not used, "1" is added to the end of the binary digits of a SU number.

5. A method as claimed in claim 1, 2, 3 or 4, wherein the number of scalar units (SU0, SU1) sharing the vector register (VR) and the number of memory modules belonging to each address is 2ⁿ, where n is an integer which may be zero, each SU number being an n-bit binary number, each new address number being composed of a binary number created by connecting a binary SU number to the end of a binary address number, and
wherein new address numbers are varied after each scanning of an access time slot over the banks (B0 to B7) in the following manner:-
when all of the scalar units (SU0, SU1) sharing the vector register (VR) are used, "1" is added to the end of the binary digits of an address number, or 2ⁿ is added to the binary SU number; and
when some of the scalar units (SU0, SU1) are not used, "1" is added to the end of the binary digits of the SU number.

6. A vector processor, having a plurality of scalar units (SU0, SU1) each for handling scalar operations, and a vector unit for handling vector operations, said vector unit (VU) having a vector register (VR) for storing vector data, and said vector register (VR) being shared by said plurality of scalar units (SU0, SU1),
characterised in that
each of said scalar units (SU0, SU1) is identified by a respective SU number;
and in that said vector register (VR) comprises:-
a plurality of banks (B0 to B7) for storing vector data,
each of said banks (B0 to B7) comprising a plurality of memory modules for storing vector elements,
each of said banks (B0 to B7) having a plurality of addresses, to each of which addresses a plurality of said memory modules belong, the number of memory modules belonging to each address being equal to the number of scalar units (SU0, SU1) sharing the vector register (VR),
each memory module belonging to each address having a SU number allotted thereto which is equal to that of a respective scalar unit (SU0, SU1), each memory module being respectively for storing a vector element relevant to a scalar unit (SU0, SU1) having the same SU number as the module,
each of said vector elements being accessed by assigning an address number and a SU number;
and further characterised by
an address generator (ADG, 25; 50 to 59) for generating new address numbers for accessing each of said memory modules, each new address number being composed of an address number and a SU number relevant to the memory module concerned, said SU number being a number identifying a respective scalar unit (SU0, SU1).

7. A vector processor as claimed in claim 6, wherein vector data relevant to each respective scalar unit (SU0, SU1) is stored in memory modules having SU numbers equal to that of the scalar unit (SU0, SU1) concerned, interleaving the vector data in the banks (B0 to B7), and starting from a first bank.

8. A vector processor as claimed in claim 6 or 7, wherein said vector register (VR) further comprises a plurality of ports (30, 31, 32, 33, 34) for accessing the banks (B0 to B7), and said vector register (VR) has time slots having equal predetermined time periods, during each of which time slots only one bank (B0 to B7) is available for access;
wherein each of the time slots scans from bank to bank, so that a bank (B0 to B7) is available for access in the time slot, and the time slot is shifted from one bank to the next bank with a period equal to the period of the time slot, to make successive banks (B0 to B7) available for access in the time slot, and after scanning has reached a last bank the time slot shifts back to a first bank, and repeats the same scanning sequence;
the number of said time slots being equal to the number of banks (B0 to B7), and said time slots are displaced one from another by time periods equal to the period of the time slot;
each of said time slots also scanning each of said ports (30, 31, 32, 33, 34) in a manner similar to the scanning of the banks (B0 to B7); and
during a time slot, each of said ports (30, 31, 32, 33, 34) is accessible to/from that one of the banks (B0 to B7) which is being scanned by same time slot at the moment concerned.

9. A vector processor as claimed in claim 6, 7 or 8, wherein when one or some of the scalar units (SU0, SU1) sharing the vector register (VR) is or are not used, the memory modules relevant to said unused scalar unit or units are employed for increasing memory capacity of the scalar unit or units using the vector register (VR).

10. A vector processor as claimed in claim 6, 7, 8 or 9, wherein each said new address number is composed of a binary number created by connecting a SU number to the end of an address number, and the new address number is varied after each scanning of an access time slot over the banks (B0 to B7) in the following manner:-
when all of the scalar units (SU0, SU1) sharing the vector register (VR) are used, "1" is added to the end of the binary digits of the address number; and
when some of the scalar units (SU0, SU1) sharing the vector register (VR) are not used, "1" is added to the end of the binary digits of a SU number.

11. a vector processor as claims in claim 6, 7, 8, 9 or 10, wherein the number of scalar units (SU0, SU1) sharing the vector register (VR) and the number of memory modules belonging to each of the address is 2ⁿ, where n is an integer which may be zero, each SU number being composed of an n-bit binary number, each new address number being composed of a binary number created by connecting a binary SU number to the end of a binary address number, and new address numbers are varied after each scanning of an access slot over the banks (B0 to B7) in the following manner:-
when all of the scalar units (SU0, SU1) sharing the vector register (VR) are used, "1" is added to the end of the binary digits of an address number, or 2ⁿ is added to the binary SU number; and
when some of the scalar units (SU0, SU1) are not used, "1" is added to the end of the binary digits of the SU number.

12. A vector processor as claimed in claim 6, 7, 8, 9, 10 or 11, wherein said address generator (ADG, 25; 50 to 59) comprises:-
a multiplexer (25; 58) for receiving a new address number and replacing it with another new address number;
a plurality of address registers (50 to 57), equal in number to the banks (B0 to B7), connected in cascade to receive a new address number from said multiplexer and successively shift this new address number from address register to address register in synchronisation with the shifting of a time slot, so that in each time slot said address registers send said new address number successively to banks (B0 to B7) respectively connected to the address registers;
an incrementer (59) connected to the last stage of the cascade for adding one (unity) to the address number or SU number of the new address sent from the last stage of the cascade.

13. A vector processor as claimed in claim 6, 7, 8, 9, 10 or 11, further comprising:-
a second multiplexer (74), for receiving a vector length and replacing it by a new vector length;
a vector length register (VLR, 75) for storing a vector length corresponding to a number of vector elements to be accessed in succession; and
a subtracter (76) for decreasing the stored vector length by one, each time a new address is accessed.

## Patentansprüche

1. Verfahren zum Steuern eines Vektorregisters in einem Vektorprozessor, mit einer Vielzahl von Skalareinheiten jeweils zum Bearbeiten von Skalaroperationen, und einer Vektoreinheit zum Bearbeiten von Vektoroperationen, wobei die genannte Vektoreinheit (VU) ein Vektorregister (VR), das sich die genannten Skalareinheiten (SU0, SU1) teilen, umfaßt,
dadurch gekennzeichnet, daß
jede der genannten Skalareinheiten (SU0, SU1) durch eine entsprechende SU-Nummer identifiziert wird;
und daß das genannte Vektorregister (VR) umfaßt:
eine Vielzahl von Banken (B0 bis B7) zum Speichern von Vektordaten,
wobei jede der genannten Banken (B0 bis B7) eine Vielzahl von Speichermodulen zum Speichern von Vektorelementen umfaßt,
jede der genannten Banken (B0 bis B7) eine Vielzahl von Adressen aufweist, zu jeder von welchen Adressen eine Vielzahl der genannten Speichermodule gehört, die Anzahl der zu jeder Adresse gehörenden Speichermodule gleich der Anzahl von Skalareinheiten (SU0, SU1) ist, die sich das Vektorregister (VR) teilen, und jedem der zu einer Adresse gehörenden Speichermodule eine SU-Nummer zugeteilt wird, die jener einer jeweiligen Skalareinheit (SU0, SU1) entspricht, jeder Speichermodul zum Speichern eines entsprechenden Vektorelements dient, das für die Skalareinheit (SU0, SU1) mit der gleichen SU-Nummer wie der Modul relevant ist, und
auf jedes der genannten Vektorelemente durch das Zuordnen einer Adressennummer und einer SU-Nummer zugegriffen werden kann;
und ferner dadurch gekennzeichnet, daß das genannte Verfahren umfaßt:
Speichern von für die entsprechenden genannten Skalareinheiten (SU0, SU1) relevanten Vektordaten in Speichermodulen mit SU-Nummern, die jenen der jeweiligen betreffenden Skalareinheiten (SU0, SU1) entsprechen, wobei die Vektordaten in den genannten Banken (B0 bis B7) ausgehend von der ersten Bank, geschachtelt werden;
Identifizieren jedes der Speichermodule, die zu einer Adresse gehören, durch eine neue Adressennummer, die durch das Kombinieren einer Adressennummer und einer SU-Nummer geschaffen wird, und
Zugreifen auf die Vektordaten durch das Zuordnen derartiger neuer Adressennummern.

2. Verfahren nach Anspruch 1, bei welchem das Vektorregister (VR) ferner eine Vielzahl von Ports (30, 31, 32, 33, 34) zum Zugreifen auf die Banken (B0 bis B7) umfaßt, und das Vektorregister (VR) Zeitkanäle mit gleichen vorherbestimmten Zeitperioden aufweist, durch jeden von welchen Zeitkanälen nur auf eine Bank (B0 bis B7) zugegriffen wird;
bei welchem jeder der Zeitkanäle von Bank zu Bank scannt, so daß auf eine Bank (B0 bis B7) im Zeitkanal zugegriffen werden kann, und der Zeitkanal von einer Bank zur nächsten Bank mit einer Periode gleich der Periode des Zeitkanals verschoben wird, um im Zeitkanal auf aufeinanderfolgende Banken (B0 bis B7) zugreifen zu können, und, nachdem das Scannen die letzte Bank erreicht hat, sich der Zeitkanal zurück zur ersten Bank verschiebt, und die gleiche Scan-Sequenz wiederholt;
bei welchem die Anzahl der genannten Zeitkanäle gleich ist der Anzahl von Banken (B0 bis B7), und die genannten Zeitkanäle voneinander um Zeitperioden gleich der Periode des Zeitkanals versetzt werden;
bei welchem jeder der genannten Zeitkanäle auch jeden der genannten Ports (30, 31, 32, 33, 34) auf eine Weise ähnlich dem Scannen der Banken (B0 bis B7) scannt; und
während eines Zeitkanals jeder der genannten Ports (30, 31, 32, 33, 34) für jene/von jener der Banken (B0 bis B7), die vom Zeitkanal im betreffenden Moment gescannt wird, zugängig ist.

3. Verfahren nach Anspruch 1 oder 2, bei welchem, wenn eine oder einige der Skalareinheiten (SU0, SU1), die sich das Vektorregister (VR) teilen, nicht verwendet wird oder werden, die für die genannte nicht verwendete Skalareinheit oder -einheiten relevanten Speichermodule zum Erhöhen der Speicherkapazität der Skalareinheit oder -einheiten, die das Vektorregister (VR) verwendet oder verwenden, eingesetzt werden.

4. Verfahren nach Anspruch 1, 2 oder 3, bei welchem jede genannte neue Adressennummer aus einer Binärzahl besteht, die durch das Verbinden einer SU-Nummer mit dem Ende einer Adressennummer geschaffen wird, und die neuen Adressennummern nach jedem Scannen eines Zugriffszeitkanals über die Banken (B0 bis B7) auf folgende Weise variiert werden:
wenn alle Skalareinheiten (SU0, SU1), die sich das Vektorregister (VR) teilen, verwendet werden, wird "1" an das Ende der Binärziffern einer Adressennummer angefügt; und
wenn einige der Skalareinheiten (SU0, SU1), die sich das Vektorregister (VR) teilen, nicht verwendet werden, wird "1" an das Ende der Binärziffern einer SU-Nummer angefügt.

5. Verfahren nach Anspruch 1, 2, 3 oder 4, bei welchem die Anzahl von Skalareinheiten (SU0, SU1), die sich das Vektorregister (VR) teilen, und die Anzahl von Speichermodulen, die zu jeder Adresse gehören, 2ⁿ ist, wobei n eine ganze Zahl ist, die Null sein kann, jede SU-Nummer eine n Bit-Binärzahl ist, jede neue Adressennummer aus einer Binärzahl besteht, die durch das Verbinden einer binären SU-Nummer mit dem Ende einer binären Adressennummer geschaffen wird, und
bei welchem neue Adressennummern nach jedem Scannen eines Zugriffszeitkanals über die Banken (B0 bis B7) auf folgende Weise variiert werden:
wenn alle Skalareinheiten (SU0, SU1), die sich das Vektorregister (VR) teilen, verwendet werden, wird "1" an das Ende der Binärziffern einer Adressennummer angefügt, oder es wird 2ⁿ an die binäre SU-Nummer angefügt; und
wenn einige der Skalareinheiten (SU0, SU1) nicht verwendet werden, wird "1" an das Ende der Binärziffern der SU-Nummer angefügt.

6. Vektorprozessor, mit einer Vielzahl von Skalareinheiten (SU0, SU1) jeweils zum Bearbeiten von Skalaroperationen, und einer Vektoreinheit zum Bearbeiten von Vektoroperationen, wobei die genannte Vektoreinheit (VU) ein Vektorregister (VR) zum Speichern von Vektordaten aufweist, und sich die genannte Vielzahl von Skalareinheiten (SU0, SU1) das genannte Vektorregister (VR) teilt,
dadurch gekennzeichnet, daß
jede der genannten Skalareinheiten (SU0, SU1) durch eine entsprechende SU-Nummer identifiziert wird;
und daß das genannte Vektorregister (VR) umfaßt:
eine Vielzahl von Banken (B0 bis B7) zum Speichern von Vektordaten,
wobei jede der genannten Banken (B0 bis B7) eine Vielzahl von Speichermodulen zum Speichern von Vektorelementen umfaßt,
jede der genannten Banken (B0 bis B7) eine Vielzahl von Adressen aufweist, zu jeder von welchen Adressen eine Vielzahl der genannten Speichermodule gehört, wobei die Anzahl der zu jeder Adresse gehörenden Speichermodule gleich der Anzahl von Skalareinheiten (SU0, SU1) ist, die sich das Vektorregister (VR) teilen,
jedem der zu einer Adresse gehörenden Speichermodule eine SU-Nummer zugeteilt wird, die gleich jener einer entsprechenden Skalareinheit (SU0, SU1) ist, jeder Speichermodul jeweils zum Speichern eines Vektorelements dient, das für eine Skalareinheit (SU0, SU1) mit der gleichen SU-Nummer wie der Modul relevant ist,
auf jedes der genannten Vektorelemente durch das Zuordnen einer Adressennummer und einer SU-Nummer zugegriffen wird;
und ferner gekennzeichnet durch
einen Adressengenerator (ADG, 25; 50 bis 59) zum Erzeugen neuer Adressennummern zum Zugreifen auf jeden der genannten Speichermodule, wobei jede neue Adressennummer aus einer Adressennummer und einer SU-Nummer, relevant für den betreffenden Speichermodul, besteht, und die genannte SU-Nummer eine Nummer ist, die eine entsprechende Skalareinheit (SU0, SU1) identifiziert.

7. Vektorprozessor nach Anspruch 6, bei welchem für jede entsprechende Skalareinheit (SU0, SU1) relevante Vektordaten in Speichermodulen mit SU-Nummern gleich jenen der betreffenden Skalareinheit (SU0, SU1) gespeichert werden, wobei die Vektordaten in den Banken (B0 bis B7) geschachtelt sind, und von der ersten Bank ausgegangen wird.

8. Vektorprozessor nach Anspruch 6 oder 7, bei welchem das genannte Vektorregister (VR) ferner eine Vielzahl von Ports (30, 31, 32, 33, 34) zum Zugreifen auf die Banken (B0 bis B7) umfaßt, und das genannte Vektorregister (VR) Zeitkanäle mit gleichen vorherbestimmten Zeitperioden aufweist, durch jeden von welchen Zeitkanälen nur eine Bank (B0 bis B7) für einen Zugriff zur Verfügung steht;
bei welchem jeder der Zeitkanäle von Bank zu Bank scannt, so daß eine Bank (B0 bis B7) im Zeitkanal für einen Zugriff zur Verfügung steht, und der Zeitkanal von einer Bank zur nächsten Bank mit einer Periode gleich der Periode des Zeitkanals verschoben wird, um im Zeitkanal aufeinanderfolgende Banken (B0 bis B7) für einen Zugriff verfügbar zu machen, und, nachdem das Scannen die letzte Bank erreicht hat, sich der Zeitkanal zurück zur ersten Bank verschiebt, und die gleiche Scan-Sequenz wiederholt;
die Anzahl der genannten Zeitkanäle gleich ist der Anzahl von Banken (B0 bis B7), und die genannten Zeitkanäle voneinander um Zeitperioden gleich der Periode des Zeitkanals versetzt sind;
jeder der genannten Zeitkanäle auch jeden der genannten Ports (30, 31, 32, 33, 34) auf eine Weise ähnlich dem Scannen der Banken (B0 bis B7) scannt; und
während eines Zeitkanals jeder der genannten Ports (30, 31, 32, 33, 34) für jene/von jener der Banken (B0 bis B7), die vom gleichen Zeitkanal im betreffenden Moment gescannt wird, zugängig ist.

9. Vektorprozessor nach Anspruch 6, 7 oder 8, bei welchem, wenn eine oder einige der Skalareinheiten (SU0, SU1), die sich das Vektorregister (VR) teilen, nicht verwendet wird oder werden, die für die genannte nicht verwendete Skalareinheit oder -einheiten relevanten Speichermodule zum Erhöhen der Speicherkapazität der Skalareinheit oder -einheiten, die das Vektorregister (VR) verwendet oder verwenden, eingesetzt werden.

10. Vektorprozessor nach Anspruch 6, 7, 8 oder 9, bei welchem jede genannte neue Adressennummer aus einer Binärzahl besteht, die durch das Verbinden einer SU-Nummer mit dem Ende einer Adressennummer geschaffen wird, und die neue Adressennummer nach jedem Scannen eines Zugriffszeitkanals über die Banken (B0 bis B7) auf folgende Weise variiert wird:
wenn alle Skalareinheiten (SU0, SU1), die sich das Vektorregister (VR) teilen, verwendet werden, wird "1" an das Ende der Binärziffern einer Adressennummer angefügt; und
wenn einige der Skalareinheiten (SU0, SU1), die sich das Vektorregister (VR) teilen, nicht verwendet werden, wird "1" an das Ende der Binärziffern einer SU-Nummer angefügt.

11. Vektorprozessor nach Anspruch 6, 7, 8, 9 oder 10, bei welchem die Anzahl von Skalareinheiten (SU0, SU1), die sich das Vektorregister (VR) teilen, und die Anzahl von Speichermodulen, die zu jeder Adresse gehören, 2ⁿ ist, wobei n eine ganze Zahl ist, die Null sein kann, jede SU-Nummer aus einer n Bit-Binärzahl besteht, jede neue Adressennummer aus einer Binärzahl besteht, die durch das Verbinden einer binären SU-Nummer mit dem Ende einer binären Adressennummer geschaffen wird, und neue Adressennummern nach jedem Scannen eines Zugriffskanals über die Banken (B0 bis B7) auf folgende Weise variiert werden:
wenn alle Skalareinheiten (SU0, SU1), die sich das Vektorregister (VR) teilen, verwendet werden, wird "1" an das Ende der Binärziffern einer Adressennummer angefügt, oder es wird 2ⁿ an die binäre SU-Nummer angefügt; und
wenn einige der Skalareinheiten (SU0, SU1) nicht verwendet werden, wird 1" an das Ende der Binärziffern der SU-Nummer angefügt.

12. Vektorprozessor nach Anspruch 6, 7, 8, 9, 10 oder 11, bei welchem der genannte Adressengenerator (ADG, 25; 50 bis 59) umfaßt:
einen Multiplexer (25; 58) zum Empfangen einer neuen Adressennummer und Ersetzen derselben durch eine andere neue Adressennummer;
eine Vielzahl von Adressenregistern (50 bis 57) der gleichen Anzahl wie die Banken (B0 bis B7), die in Kaskade verbunden sind, um eine neue Adressennummer vom genannten Multiplexer zu empfangen, und diese neue Adressennummer aufeinanderfolgend von Adressenregister zu Adressenregister synchron mit dem Verschieben eines Zeitkanals zu verschieben, so daß in jedem Zeitkanal die genannten Adressenregister die genannte neue Adressennummer aufeinanderfolgend an die Banken (B0 bis B7) sendet, die jeweils mit den Adressenregistern verbunden sind;
einen Inkrementer (59), der mit der letzten Stufe der Kaskade verbunden ist, zum Anfügen von Eins (Einheit) an die Adressennummer oder SU-Nummer der neuen Adresse, die von der letzten Stufe der Kaskade gesendet wird.

13. Vektorprozessor nach Anspruch 6, 7, 8, 9, 10 oder 11, ferner mit:
einem zweiten Multiplexer (74) zum Empfangen einer Vektorlänge und Ersetzen derselben durch eine neue Vektorlänge;
einem Vektorlängenregister (VLR, 75) zum Speichern einer Vektorlänge, die einer Anzahl von Vektorelementen entspricht, auf die aufeinanderfolgend zuzugreifen ist; und
einem Subtrahierer (76) zum Verringern der gespeicherten Vektorlänge um Eins, jedesmal, wenn auf eine neue Adresse zugegriffen wird.

## Revendications

1. Procédé pour commander un registre vectoriel dans un processeur vectoriel comprenant une pluralité d'unités scalaires dont chacune est destinée à traiter des opérations scalaires et une unité vectorielle destinée à traiter des opérations vectorielles, ladite unité vectorielle (VU) comprenant un registre vectoriel (VR) qui est partagé par ladite pluralité d'unités scalaires (SU0, SU1),
caractérisé en ce que :
chacune desdites unités scalaires (SU0, SU1) est identifiée par un numéro de SU respectif ;
et en ce que ledit registre vectoriel (VR) comprend :
une pluralité de bancs (B0 à B7) pour stocker des données de vecteur,
chacun desdits bancs (B0 à B7) comprenant une pluralité de modules de mémoire pour stocker des éléments vectoriels,
chacun desdits bancs (B0 à B7) possédant une pluralité d'adresses, à chacune de ces adresses correspond une pluralité desdits modules de mémoire, le nombre de modules de mémoire correspondant à chaque adresse étant égal au nombre d'unités scalaires (SU0, SU1) se partageant le registre vectoriel (VR) et à chacun des modules de mémoire correspondant à une adresse est alloué un numéro de SU correspondant à celui d'une unité scalaire respective (SU0, SU1), chaque module de mémoire ayant pour but de stocker un élément vectoriel respectif se rapportant à l'unité scalaire (SU0, SU1) possédant le même numéro de SU que le module, et
chacun desdits éléments vectoriels étant accessible en affectant un numéro d'adresse et un numéro de SU ;
et caractérisé en outre en ce que ledit procédé inclut :
le stockage de données de vecteur se rapportant auxdites unités scalaires respectives (SU0, SU1) dans les modules de mémoire possédant des numéros de SU correspondant à ceux des unités scalaires respectives (SU0, SU1) concernées, les données de vecteur étant imbriquées dans lesdits bancs (B0 à B7), en commençant à partir d'un premier banc ;
l'identification de chacun des modules de mémoire correspondant à une adresse par un nouveau numéro d'adresse qui est créé en combinant un numéro d'adresse et un numéro de SU ; et
l'accès aux données de vecteur en affectant de tels nouveaux numéros d'adresse.

2. Procédé selon la revendication 1, dans lequel le registre vectoriel (VR) comprend en outre une pluralité de ports (30, 31, 32, 33, 34) afin d'accéder aux bancs (B0 à B7), et le registre vectoriel (VR) met à disposition des tranches de temps présentdant des périodes de temps prédéterminées égales, et au cours de chacune de ces tranches de temps, il n'est accédé qu'à un banc (B0 à B7) ;
dans lequel chacune des tranches de temps est balayée de banc en banc, de manière à ce qu'un banc (B0 à B7) soit rendu accessible durant la tranche de temps et de manière à ce que la tranche de temps soit décalée d'un banc au banc suivant selon une période égale à la période de la tranche de temps, afin de rendre les bancs successifs (B0 à B7) accessibles durant la tranche de temps, et, de manière à ce qu'après que le balayage a atteint le dernier banc, la tranche de temps se décale en retour vers un premier banc et répète la même séquence de balayage ;
dans lequel le nombre desdites tranches de temps est égal au nombre de bancs (B0 à B7) et dans lequel lesdites tranches de temps sont déplacées l'une par rapport à l'autre selon des périodes de temps égales à la période de la tranche de temps ;
dans lequel chacune desdites tranches de temps balaye aussi chacun desdits ports (30, 31, 32, 33, 34) d'une manière similaire au balayage des bancs (B0 à B7) ; et
durant une tranche de temps, chacun desdits ports (30, 31, 32, 33, 34) est accessible pour/à partir de celui des bancs (B0 à B7) qui est balayé par la tranche de temps à l'instant concerné.

3. Procédé selon la revendication 1 ou 2, dans lequel lorsqu'une ou plusieurs des unités scalaires (SU0, SU1) se partageant le registre vectoriel (VR) n'est pas ou ne sont pas utilisée(s), les modules de mémoire se rapportant à ladite unité (auxdites unités) scalaire(s) inutilisée(s) sont utilisés afin d'augmenter la capacité mémoire de l'unité scalaire ou des unités scalaires utilisant le registre vectoriel (VR).

4. Procédé selon la revendication 1, 2 ou 3, dans lequel chaque dit nouveau numéro d'adresse est composé d'un nombre binaire créé en connectant un numéro de SU à l'extrémité d'un numéro d'adresse, et dans lequel des nouveaux numéros d'adresse subissent des modifications après chaque balayage d'une tranche de temps d'accès sur les bancs (B0 à B7) de la manière suivante :
lorsque toutes les unités scalaires (SU0, SU1) partageant le registre vectoriel (VR) sont utilisées, "1" est ajouté à l'extrémité des éléments binaires d'un numéro d'adresse ; et
lorsque quelques unes des unités scalaires (SU0, SU1) se partageant le registre vectoriel (VR) ne sont pas utilisées, "1" est ajouté à l'extrémité des éléments binaires d'un numéro de SU.

5. Procédé selon la revendication 1, 2, 3 ou 4, dans lequel le nombre d'unités scalaires (SU0, SU1) se partageant le registre vectoriel (VR) et le nombre de modules de mémoire se rapportant à chaque adresse sont égaux à 2ⁿ, où n est un entier qui peut être égal à zéro, chaque numéro de SU étant un nombre binaire à n bits, chaque nouveau numéro d'adresse étant composé d'un nombre binaire créé en connectant un numéro de SU binaire à l'extrémité d'un numéro d'adresse binaire, et
dans lequel de nouveaux numéros d'adresse sont changés après chaque balayage d'une tranche de temps d'accès sur les bancs (B0 à B7) de la manière suivante :
lorsque toutes les unités scalaires (SU0, SU1) se partageant le registre vectoriel (VR) sont utilisées, "1" est ajouté à l'extrémité des éléments binaires d'un numéro d'adresse ou 2ⁿ est ajouté au numéro de SU binaire ; et
lorsque quelques unes des unités scalaires (SU0, SU1) ne sont pas utilisées, "1" est ajouté à l'extrémité des éléments binaires du numéro de SU.

6. Processeur vectoriel possédant une pluralité d'unités scalaires (SU0, SU1) dont chacune est destinée à traiter des opérations scalaires et possédant une unité vectorielle pour traiter des opérations vectorielles, ladite unité vectorielle (VU) possédant un registre vectoriel (VR) pour stocker des données de vecteur et ledit registre vectoriel (VR) étant partagé par ladite pluralité d'unités scalaires (SU0, SU1),
caractérisé en ce que :
chacune desdites unités scalaires (SU0, SU1) est identifiée par un numéro de SU respectif;
et en ce que ledit registre vectoriel (VR) comprend :
une pluralité de bancs (B0 à B7) pour stocker des données de vecteur,
chacun desdits bancs (B0 à B7) comprend une pluralité de modules de mémoire pour stocker des éléments vectoriels,
chacun desdits bancs (B0 à B7) possède une pluralité d'adresses, à chacune de ces adresses correspond une pluralité desdits modules de mémoire, le nombre de modules de mémoire correspondant à chaque adresse étant égal au nombre d'unités scalaires (SU0, SU1) se partageant le registre vectoriel (VR),
chaque module de mémoire correspondant à chaque adresse possède un numéro de SU qui lui est alloué, lequel est égal à celui d'une unité scalaire respective (SU0, SU1), chaque module de mémoire ayant respectivement pour rôle de stocker un élément vectoriel se rapportant à une unité scalaire (SU0, SU1) possédant le même numéro de SU que le module,
chacun desdits éléments vectoriels étant accédé en affectant un numéro d'adresse et un numéro de SU ;
et caractérisé en outre
par un générateur d'adresse (ADG, 25 ; 50 à 59) pour générer des nouveaux numéros d'adresse afin d'accéder à chacun desdits modules de mémoire, chaque nouveau numéro d'adresse étant composé d'un numéro d'adresse et d'un numéro de SU se rapportant au module de mémoire concerné, ledit numéro de SU étant un nombre identifiant une unité scalaire respective (SU0, SU1).

7. Processeur vectoriel selon la revendication 6, dans lequel les données de vecteur se rapportant à chaque unité scalaire respective (SU0, SU1) sont stockées dans des-modules de mémoire possédant des numéros de SU égaux à ceux de l'unité scalaire (SU0, SU1) concernée, en imbriquant les données de vecteur dans les bancs (B0 à B7) et en commençant à partir d'un premier banc.

8. Processeur vectoriel selon la revendication 6 ou 7, dans lequel ledit registre vectoriel (VR) comprend en outre une pluralité de ports (30, 31, 32, 33, 34) afin d'accéder aux bancs (B0 à B7) et dans lequel ledit registre vectoriel (B0 à B7) possède des tranches de temps présentant des périodes temporelles prédéterminées égales, durant chacune de ces tranches de temps seul un banc (B0 à B7) est disponible pour l'accès ;
dans lequel chacune des tranches de temps effectue un balayage de banc en banc, de manière à ce qu'un banc (B0 à B7) soit disponible pour l'accès durant la tranche de temps, et dans lequel la tranche de temps est décalée d'un banc vers le banc suivant avec une période égale à la période de la tranche de temps, pour rendre les bancs successifs (B0 à B7) disponibles pour l'accès dans la tranche de temps, et, après que le balayage a atteint un dernier banc, la tranche de temps se décale en arrière vers un premier banc et répète la même séquence de balayage ;
le nombre desdites tranches de temps est égal au nombre de bancs (B0 à B7) et lesdites tranches de temps sont déplacées l'une par rapport à l'autre selon des périodes de temps égales à la période de la tranche de temps ;
chacune desdites tranches de temps balaie aussi chacun desdits ports (30, 31, 32, 33, 34) d'une manière similaire au balayage des bancs (B0 à B7) ; et
au cours d'une tranche de temps, chacun desdits ports (30, 31, 32, 33, 34) est accessible pour/vers celui des bancs (B0 à B7) qui est balayé par la même tranche de temps à l'instant concerné.

9. Processeur vectoriel selon la revendication 6, 7 ou 8, dans lequel lorsqu'une ou certaines des unités scalaires (SU0, SU1) se partageant le registre vectoriel (VR) n'est pas ou ne sont pas utilisée(s), les modules de mémoire se rapportant à ladite (auxdites) unité(s) scalaire(s) inutilisée(s) sont utilisés afin d'augmenter la capacité mémoire de (des) unité(s) scalaire(s) utilisant le registre vectoriel (VR).

10. Processeur vectoriel selon la revendication 6, 7, 8 ou 9, dans lequel chaque dit nouveau numéro d'adresse est composé d'un numéro binaire créé en connectant un numéro de SU à l'extrémité d'un numéro d'adresse et dans lequel le nouveau numéro d'adresse est modifié après chaque balayage d'une tranche de temps d'accès sur les bancs (B0 à B7) de la manière suivante :
lorsque toutes les unités scalaires (SU0, SU1) se partageant le registre vectoriel (VR) sont utilisées, "1" est ajouté à l'extrémité des éléments binaires du numéro d'adresse ; et
lorsque certaines des unités scalaires (SU0, SU1) se partageant le registre vectoriel (VR) ne sont pas utilisées, "1" est ajouté à l'extrémité des éléments binaires d'un numéro de SU.

11. Processeur vectoriel selon la revendication 6, 7, 8, 9 ou 10, dans lequel le nombre d'unités scalaires (SU0, SU1) se partageant le registre vectoriel (VR) et le nombre de modules de mémoire appartenant à chacune des adresses sont égaux à 2ⁿ, où n est un entier qui peut être égal à zéro, chaque numéro de SU étant composé d'un nombre binaire de n bits, chaque nouveau numéro d'adresse étant composé d'un nombre binaire créé en connectant un numéro de SU binaire à l'extrémité d'un numéro d'adresse binaire et dans lequel de nouveaux numéros d'adresse sont modifiés après chaque balayage d'une tranche d'accès sur les bancs (B0 à B7) de la manière suivante :
lorsque toutes les unités scalaires (SU0, SU1) se partageant le registre vectoriel (VR) sont utilisées, "1" est additionné à l'extrémité des éléments binaires d'un numéro d'adresse ou 2ⁿ est additionné au numéro de SU binaire ; et
lorsque certaines des unités scalaires (SU0, SU1) ne sont pas utilisées, "1" est additionné à l'extrémité des éléments binaires du numéro de SU.

12. Processeur vectoriel selon la revendication 6, 7, 8, 9, 10 ou 11, dans lequel ledit générateur d'adresse (ADG, 25 ; 50 à 59) comprend :
un multiplexeur (25 ; 58) pour recevoir un nouveau numéro d'adresse et pour le remplacer par un autre nouveau numéro d'adresse ;
une pluralité de registres d'adresse (50 à 57) dont le nombre est égal à celui des bancs (B0 à B7), connectés en cascade afin de recevoir un nouveau numéro d'adresse provenant dudit multiplexeur et afin de décaler successivement ce nouveau numéro d'adresse à partir du registre d'adresse vers le registre d'adresse d'une manière synchronisée avec le décalage d'une tranche de temps, de manière à ce que, durant chaque tranche de temps, lesdits registres d'adresse émettent ledit nouveau numéro d'adresse successivement pour les bancs (B0 à B7) connectés respectivement aux registres d'adresse ;
un incrémenteur (59) connecté au dernier étage de la cascade afin d'additionner "1" au numéro d'adresse ou numéro de SU de la nouvelle adresse émise à partir du dernier étage de la cascade.

13. Processeur vectoriel selon la revendication 6, 7, 8, 9, 10 ou 11, comprenant en outre :
un second multiplexeur (74) pour recevoir une longueur de vecteur et pour la remplacer par une nouvelle longueur de vecteur ;
un registre de longueur de vecteur (VLR, 75) pour stocker une longueur de vecteur correspondant à un nombre d'éléments vectoriels auxquels on accède d'une manière successive ; et
un soustracteur (76) pour décrémenter de "1" la longueur de vecteur stockée, chaque fois qu'on accède à une nouvelle adresse.
